# EUROPEAN PATENT APPLICATION

(11) **EP 1 388 796 A1**
(43) Date of publication of application: **11.02.2004**
(21) Application number: 03252053.8
(22) Date of filing: 31.03.2003
(51) Int. Cl.: G06F 17/60

(54) **Transaction system and method**

(30) Priority: 09.08.2002 US 216461
(71) Applicant: FUJITSU LIMITED, Kawasaki-shi, Kanagawa 211-8588 (JP)
(72) Inventor: Sone, Masahiro, Kawasaki-shi, Kanagawa 211-8588 (JP)
(74) Representative: Stebbing, Timothy Charles

(57) **Abstract**

An electronic shopping system which facilitates the control and supervision of one user over the Internet shopping purchases made by another user. The electronic shopping system includes a customer profile database (40), a merchandise database (42), and a transaction database (45) and uses data records and identification numbers to facilitate the supervision of Internet shopping purchases. A first user may establish purchase criteria and predetermine which items and/or categories, quantity, and/or frequency of items may be available for purchase by a secondary user. A first user may also review a secondary user's purchase selections before the sales transaction is completed. Operations may be performed on data records to reduce the time and energy required to supervise purchase selections. The electronic shopping system utilizes e-mail and date/time information to inform users of activity being conducted on the electronic shopping system.

## Description

The present invention relates generally to electronic transaction systems and methods, and more particularly, to a system and method of performing a transaction (such as electronic shopping) which allows a user to supervise and regulate the transactions of another user.

The expansion of personal computers into the homes of average consumers has also expanded the usage of the Internet by such consumers, and with it, has opened a new avenue of shopping, specifically, Internet shopping. Internet shopping is capable of providing convenient purchasing abilities from one's home with the simple click of a mouse. However, Internet shopping is presently limited in the scope with which it may be used.

For example, by using Internet shopping, parents are often deprived of the opportunity to educate their children as they would with conventional shopping. During conventional shopping, where children often accompanied their parents, parents had the opportunity to educate their children and assist in the development of essential skills such as, for example, money management and budgeting, need assessment and planning, arithmetic, examining for quality, and comparison shopping, to name a few. However, Internet shopping does not presently allow a suitable form of supervision, and a parent often makes Internet shopping purchases alone.

Similarly, Internet shopping by children without direct supervision under current technology is undesirable due to the risk that the children will purchase items that their parent may find unsuitable, such as cigarettes, candy, medicine, or other items that may be injurious. Unsupervised shopping may also lead the children to purchase unnecessary and unreasonable quantities of items.

Internet shopping is also presently limited in situations where users do not have a credit card account or another suitable form of making Internet payments. In these situations, the user could pay for purchases using the credit card account of a friend or family member. However, it would be desirable for the friend or family member to have the ability to supervise and limit the Internet shopping of another user to ensure that the credit card account is not being used in an unacceptable manner.

A plurality of other situations exist where the supervision of Internet shopping is desirable, yet presently unavailable under current technology. For example, supervision by restaurant or business owners/managers over employees who purchase needed supplies, supervision by a family over their housekeeper or gardener, supervision by a child over an elderly parent, supervision by a guardian, and the like.

Retailers are also injured by the present limits to Internet shopping. Substantial groups of people, such as those described above, are excluded from the Internet shopping market. As a result, retailers are unable to market to these groups and are lose the opportunity to make additional sales that could be generated by these groups of people.

Accordingly, there is a need for an electronic shopping system which facilitates the ability of one user to control and supervise purchases made by another user.

The present invention relates in one aspect to a method and system for performing transactions via a data communications network, comprising steps or means for:
maintaining a database coupled to a data communications network, the database including a plurality of data records;
receiving a transaction authorization from a first user;
modifying a data record associated with a second user based on the transaction authorization, the data record including transaction type authorization information;
receiving a transaction request from the second user, the transaction request including a selection based on the transaction type authorization information in the data record; and
processing the transaction request for completing a transaction for the second user when the transaction is of a type authorized by the transaction authorization.

In this way, transactions of a kind not authorized by the first user are prevented from taking place, thereby avoiding unnecessary processing of transaction requests, storage of transaction requests, and unnecessary data traffic on the data communications network.

In a second aspect, the present invention provides a method and system for performing transactions via a data communications network, comprising steps or means for:
maintaining a database coupled to a data communications network, the database including a plurality of data records;
receiving a first transaction selection from a first user, the first transaction selection including at least one transaction object;
generating a first data record based on the first transaction selection;
transmitting the first data record to a second user;
receiving a transaction authorization from the second user, the transaction authorization including an identification of transaction objects in the first data record authorized to be transacted; and
generating a second data record using the transaction authorization.

In a third aspect, the present invention provides a method and system for performing transactions via a data communications network, comprising steps or means for:
maintaining a database coupled to a data communications network, the database including a plurality of data records;
receiving a first transaction selection from a first user, the first transaction selection including at least one transaction object;
generating a first data record based on the first transaction selection;
receiving a second transaction selection from a second user, the second transaction selection including at least one transaction object;
generating a second data record based on the second transaction selection;
generating a third data record in the database using the first data record and the second data record, the third data record including transaction objects in the first data record and transaction objects in the second data record not included in the first data record; and
processing the third data record for completing one or more transactions.

The above second and third aspects have similar technical effects as the first aspect in terms of efficiency of processing, storage and communication. In addition, the third aspect reduces the data entry burden on users of the system by automatically eliminating duplicate transactions.

An embodiment of the present invention is directed to an electronic shopping system which facilitates the control and supervision of one user over the Internet shopping purchases made by another user. The electronic shopping system includes a customer profile database, a merchandise database, and a transaction database and uses data records and identification numbers to facilitate the supervision of Internet shopping purchases.

In one embodiment of the invention, a computerized method for regulating electronic network shopping using a data communications network is disclosed. The method includes maintaining a database coupled to a data communications network, the database including a plurality of data records, receiving a purchase authorization from a first user, modifying a data record associated with a second user based on the purchase authorization, the data record including product authorization information, receiving a purchase request from the second user, the purchase request including a selection based on the product authorization information in the data record, and processing the purchase request for completing purchase of authorized items for the second user.

In another embodiment of the invention, the method includes maintaining a database coupled to a data communications network, the database including a plurality of data records, receiving a first purchase selection from a first user, the first purchase selection including at least one item selection, generating a first data record based on the first purchase selection, transmitting the first data record to a second user, receiving a purchase authorization from the second user, the purchase authorization including an identification of items in the first data record authorized for purchase, and generating a second data record using the purchase authorization.

In another embodiment of the invention, the method includes maintaining a database coupled to a data communications network, the database including a plurality of data records, receiving a first purchase selection from a first user, the first purchase selection including at least one item selection, generating a first data record based on the first purchase selection, receiving a second purchase selection from a second user, the second purchase selection including at least one item selection, generating a second data record based on the second purchase selection, generating a third data record in the database using the first data record and the second data record, the third data record including items in the first data record and items in the second data record not included in the first data record, and processing the third data record for completing purchase.

In another embodiment of the invention, a computerized electronic shopping system for regulated Internet shopping using a data communications network is disclosed. The computerized electronic shopping system includes a database including a plurality of data records, a processor coupled to the database, the processor configured to receive a purchase authorization from a first user over the data communications network and modify a data record associated with a second user, the data record including product authorization information, the processor further configured to receive a purchase request from the second user over the data communications network, the purchase request including a selection based on the product authorization information in the data record, and processing the purchase request for completing purchase of authorized items for the second user.

In another embodiment of the invention, the computerized electronic shopping system includes a database including a plurality of data records, a processor coupled to the database, the processor configured to receive a first purchase selection, generate a first data record based on the first purchase selection, transmit the first data record to a second user, receive a purchase authorization from the second user, the purchase authorization including an identification of items in the first data record authorized for purchase, and generating a second data record using the purchase authorization.

The above embodiments conserve hardware resources in an electronic shopping system by preventing the processing of unnecessary or unwanted electronic shopping transactions, whilst facilitating the use of the system by inexperienced users.

These and other features, aspects and advantages of the present invention will be more fully understood when considered with respect to the following detailed description, appended claims and accompanying drawings wherein:
FIG. 1 is an exemplary simplified semi-schematic block diagram of an electronic shopping system;
FIG. 2 is an exemplary semi-schematic, conceptual layout diagram detailing the organization of customer information in a customer profile database;
FIG. 3 is an exemplary simplified semi-schematic block diagram of the association between first and secondary users;
FIG. 4 is an exemplary flow-chart diagram of the operation of an embodiment of the electronic shopping system;
FIG. 5 is an exemplary semi-schematic, conceptual layout diagram detailing the organization of purchase criteria information in a customer criteria database according to category;
FIG. 6 is an exemplary semi-schematic, conceptual layout diagram detailing the organization of purchase criteria information in a customer criteria database according to category and item;
FIG. 7 is an exemplary semi-schematic, conceptual layout diagram detailing the organization of purchase criteria information in a customer criteria database according to category, item, quantity and frequency;
FIG. 8 is an exemplary flow-chart diagram of the operation of an embodiment of the electronic shopping system using authorization;
FIG. 9 is an exemplary, semi-schematic layout diagram of a selection data record stored in the transaction database;
FIG. 10 is an exemplary, conceptual flow chart diagram illustrating a compare operation on data records.

In general terms, the present invention is directed to a particular system and method which allows a user to regulate the electronic shopping of another user, specifically, shopping on the Internet. One application of the invention is a parent's regulation of the electronic shopping of a child. In a conventional retail environment, a parent would accompany the child to a retail location, such as a grocery store or a shopping center, and could provide direct supervision of the child's purchases. For example, a parent could allow or prevent the purchase of particular items, physically limit the amount of items that the child could purchase, or refuse to pay for particular items. Similarly, a parent might verbally or physically allocate a limited amount of money to be spent on particular items. The present invention provides a system for similarly regulating shopping on the Internet using customer profiles maintained by a retailer in a database.

A person skilled in the art should recognize, however, that the present invention is not limited to regulating Internet shopping of children, but may also include regulating purchases of a spouse, relative, etc.

In its most general form, an electronic shopping system includes a network server or platform computer coupled to the Internet, where the network server hosts at least one storage device or database. A user may access the server using a personal computer or other device with a connection to the Internet.

Upon accessing the server, an account may be established and a plurality of users may be associated with the account. A method of payment is preferably identified when the account is established. Users are preferably classified as first users and secondary users, where the first user typically has authority over secondary users to regulate the purchases made by the secondary users. For example, the first user may select specific items or categories of items from which the secondary users may select items for purchase. Alternatively, the system may require that purchase selections by the secondary users be reviewed and approved before the purchases are charged to a billing account and prepared for pick-up or delivery.

The regulation of electronic shopping is facilitated by the use of data records maintained in a storage device. Data records may contain information regarding which purchases may be made by particular users. Alternatively, data records may contain purchase selections that are reviewed and approved by a first user before the selections are processed for sale. Operations may be performed on the data records to provide for efficient management and regulation of purchases. Users of the system may be informed of purchases, cancellations, and any changes to data records with manually or automatically generated e-mail messages, improving the availability of information regarding purchases made with a particular account.

It will be appreciated that the system and method according to the present invention provides a significant improvement in the ability of one person to regulate and monitor the purchases made by another person using electronic shopping. An efficient method of regulating electronic shopping provides consumers, especially parents and guardians, greater flexibility and ability to supervise the electronic shopping of others. Retailers also have the ability to reach a wider range of consumers who may have been previously kept out of the electronic shopping market.

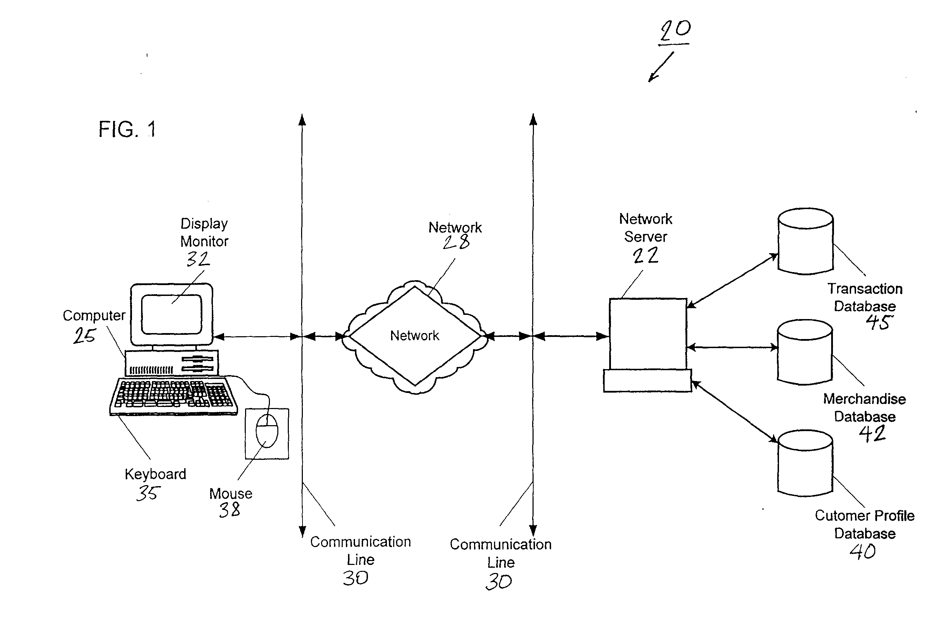

Considering the foregoing summary of the features of the system and method of the present invention, FIG. 1 depicts a simplified semi-schematic block diagram of an exemplary electronic shopping system 20. The system comprises a network server 22, coupled to at least one database or other suitable storage device. The system further includes a personal computer 25 in communication with the network server 22 over a computer network 28 such as, for example, the Internet over communication lines 30. The communication lines 30 may include ISDN lines, ADSL lines, DSL lines, wireless communication, such as infrared or RF-based wireless communication, and the like.

The personal computer 25 may be equipped with a display monitor 32, input device such as, for example, a keyboard 35 and/or mouse 38, and a network connection device such as, for example, a modem and/or Ethernet transceiver (not shown).

The network server hosts at least one database. Illustrated in the diagram are three databases: a customer profile database 40, a merchandise database 42, and a transaction database 45. In this illustrated embodiment, the three databases reside in two separate mass storage devices, each taking the form of a hard disk drive or drive array. However, the three databases may also reside in one single storage device or any number of storage devices. The storage devices may also be of any suitable form. The customer profile database 40 preferably contains data records for each customer account that has been enrolled into the server. The merchandise database 42 preferably contains data records of all products available for purchase by a customer, including information on each of the products, such as manufacture and nutrition information. Selection of items for purchase may be made from the products maintained in the merchandise database. The transaction database 45 preferably contains data records of purchase transactions that have either occurred or are in progress.

In other embodiments the system may include other equipment to connect to the Internet. For example, a network terminal, a wireless device, such as a mobile telephone or personal data assistant (PDA), a television equipped for Internet connection or equipped with an Internet access terminal, such as one sold under the trademark WebTV® by Microsoft, or any other suitable device may be used to access the Internet. The description of particular devices is exemplary and not intended to be limiting in any sense.

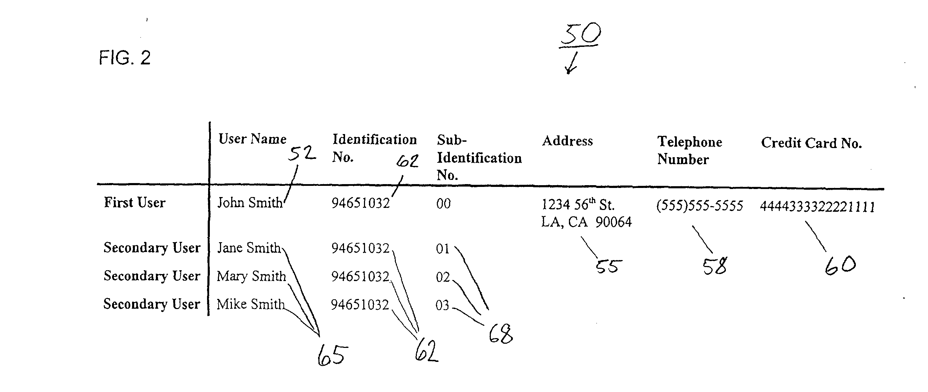

FIG. 2 is an exemplary semi-schematic, conceptual layout diagram detailing the organization of customer information in a customer profile database. The customer profile database comprises a series of customer specific customer records. Illustrated generally at 50 is an exemplary customer record. A customer record can be created when the customer registers with the server. A customer may register with the server over the Internet by entering and submitting information via a web page or website having a uniform resource locator ("URL") address. During registration, customers may be required to enter their names 52, shipping and billing addresses 55, telephone numbers 58, and credit card numbers 60 or other account numbers that may be used for billing purposes. The credit card or account number 60 may be used to verify that the customer enrolling is either an adult or has the available funds to pay for purchases made using the electronic shopping system. Upon submitting the information, the customer is preferably assigned an account or identification number 62. The customer registering is typically the primary or first user.

The first user, during registration or at any other time when accessing the electronic shopping system, may also indicate other users who may have access to the account. Any number of additional or secondary users 65 may be added to the account. Each secondary user is preferably assigned a unique identification number or sub-identification number 68. Each sub-identification number 68 is preferably associated with the first user's identification number 62. For example, each account user may have the same base identification number 62 with an additional sub-identification number 68 that is used to distinguish one user from another.

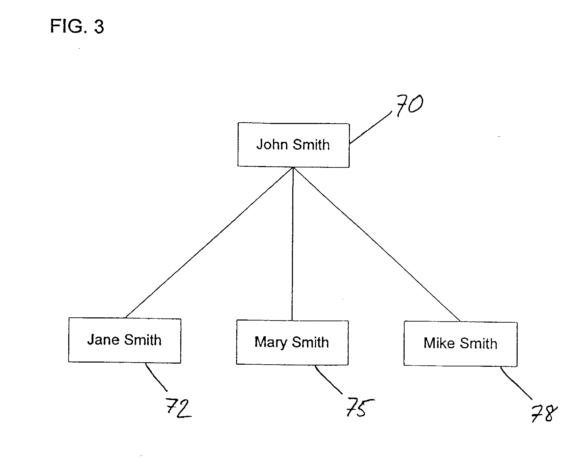

FIG. 3 is an exemplary simplified semi-schematic block diagram of an association between first and secondary users of an account in a first embodiment of the invention. According to the example illustrated in FIG. 3, John Smith 70 is a first user, and Jane Smith 72, Mary Smith 75, and Mike Smith 78 are secondary users. The first user alone may be able to determine the criteria for each of the secondary users. In another embodiment, the first user alone may be able to review and approve purchase selections made by the secondary users.

The example of FIG. 3 illustrates only one of the possible relationships among users. The system may also be configured so that more than one user is considered a first user with the ability to determine purchase criteria. For example, two adults may share responsibility in regulating the purchases of a plurality of children. In this scenario, each first user may have the ability to determine the criteria for the secondary users.

In an exemplary embodiment, the first user may establish purchase criteria for each secondary user by selecting products or categories of products from merchandise lists in the merchandise database. The first user may set unique criteria for each secondary user, or alternatively, may use the same criteria for all secondary users.

A first user is typically a person who has the ability to make responsible purchase decisions and has the ability to pay for purchases using, for example, a credit card. A secondary user is typically a person who may require purchase supervision or does not have a credit card or other means for making electronic shopping purchases. For example, a first user may be a parent and secondary users may be children of the parent. A first user may establish and manage purchase criteria for each of the secondary users. However, if desired, the first user may also remove all restrictions so that the secondary user may make purchases without regulation or review. This may be desirable after a period of time of regulated shopping, and the secondary user has thereafter gained the trust of the first user and has learned to make responsible shopping decisions. Also, an account may have two parents or any number of first users who do not need monitoring. Accordingly, the server may also permit the classification of more than one user as a first user. By so classifying, more than one user may have the ability to perform functions that are typically reserved for the first user. For example, both parents may desire to have the ability to define purchase criteria for their children. However, the advantages provided by the present invention are not limited to use in parent-child relationships. As described above, there are a plurality of situations, besides the supervision of a parent over a child, where it would it would be desirable for one person to regulate the purchases of another made using an network or Internet shopping system.

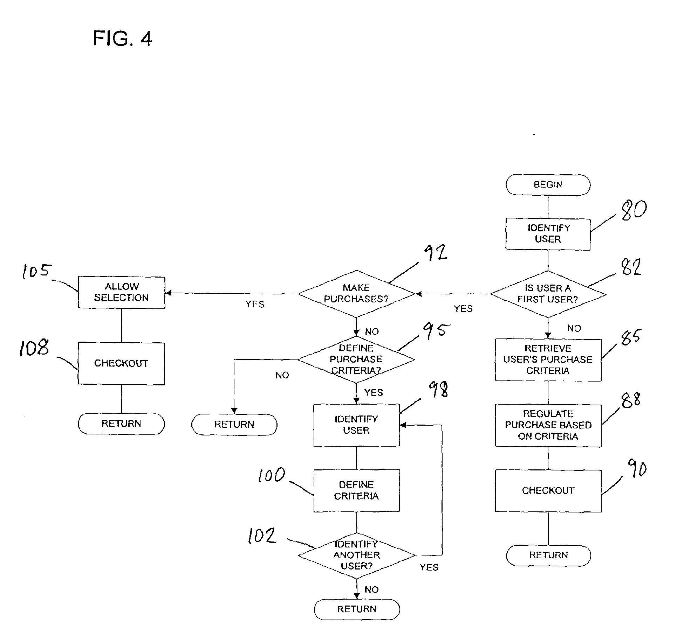

FIG. 4 is an exemplary flow-chart diagram of the operation of an embodiment of the electronic shopping system. Upon accessing the electronic shopping system, a particular user is identified by the server in step 80. Identification of the user may occur during a log on process in which the user is authenticated by the server upon receipt of a valid identification number, name, or user indicia. A password unique to the particular user may additionally be incorporated into the authentication process for ensuring the identity of the user.

In step 82, the server determines whether the user is a first user or a secondary user. If the user is a secondary user, the server retrieves the associated purchase criteria from the customer criteria database in step 85. In step 88, the server provides a user interface allowing the secondary user to select items for purchase, subject to the limitations in that particular user's purchase criteria. The purchase criteria may be used to regulate the purchase in a variety of ways, including displaying on the display screen only those items authorized for purchase or displaying all available items on the display screen and later filtering out unauthorized items based on the purchase criteria.

Similarly, the quantity of items authorized may be implemented in a variety of ways. Any of the item selection mechanisms conventional in the art may be used. For example, instead of displaying available products, the user may search for specific products or submit a list of products desired to be purchased. The examples given are merely exemplary ways in which the criteria may be utilized to regulate a user's purchases and are not intended to be limiting in any way.

After the user selections have been regulated according to the purchase criteria, the server involves a checkout routine in step 90 for completing the purchase transaction. In this regard, the items that are allowed for purchase in accordance with the purchase criteria are billed to the account as established by the first user. The items may then be sent to the user at the address as established by the first user. Alternatively, the items may be accumulated and made available for pick up at a determined location.

In step 92, if the user is a first user, the user is given the choice to either make purchases using the electronic shopping system or define the purchase criteria of a secondary user. In step 95, the first user may choose not to define purchase criteria and may therefore not continue in the process. Otherwise, the first user may identify one or more secondary users and define their purchase criteria in step 98. A secondary user may be identified by an identification number or user name, chosen from a list of existing secondary users, or identified by any other suitable identification method.

When identifying the user, or during any suitable step in the process, the first user may add new secondary users to the account (not shown). The first user may also set purchase criteria for themselves. While the first user can always redefine the criteria or remove all restrictions on themselves, defining a criteria for the first user may allow shopping management or self-regulation.

The first user may further define the purchase criteria which will determine which items a particular secondary user may purchase when using the electronic shopping system in step 100. Briefly, the first user may define the criteria by placing limitations including item categories, types, brands, quantities, purchase frequencies, and the like. A limitation may be used alone or in combination with other limitations. The first user may identify limitations by selecting options from a list displayed on a web page, listing options in a data entry form on a website for transmitting in the form of an e-mail, or via any other suitable method conventional in the art. For example, selections and limitations may be defined in a printed form sent to an electronic shopping system customer service center who may in turn input the limitations into the system.

A data record containing the purchase criteria is preferably created based on the selected limitations. After the first user has defined purchase criteria for a particular user, the first user may choose to select another secondary user and define the criteria for that secondary user in step 102. The first user may preferably redefine the criteria for any secondary user any number of times during a single logon session.

If the first user chooses to make a purchase, the server allows the first user to select items for purchase in step 105. The first user preferably selects items for purchase without regulation from other users. However, if the first user has defined a purchase criteria for him/herself, regulation of purchases may occur in a process similar to the regulation of a secondary user as described above. After all items have been selected for purchase, the system preferably involves a routine step 108 for completing the purchase transaction. In this regard, the items that are allowed for purchase are billed to the account as established by the first user. The items may then be sent to the user at the address established by the first user. Alternatively, the items may be accumulated and made available for pick up at a determined location.

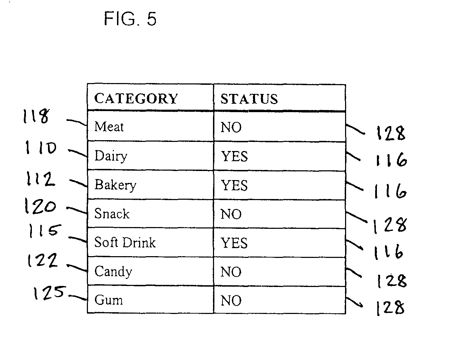

FIG. 5 is an exemplary semi-schematic, conceptual layout diagram detailing the organization of purchase criteria information in the customer criteria database according to one embodiment of the invention. The purchase criteria is preferably determined according to product category. The first user may identify categories of products which are to be available for purchase by the secondary user. The server may then generate a data record identifying which categories of products are available for purchase by a particular secondary user. In the example illustrated in FIG. 5, the user is authorized to purchase all products within the Dairy 110, Bakery 112, and Soft Drink 115 categories, as noted with a "yes" 116 status. However, the user is not authorized to purchase products from the Meat 118, Snack 120, Candy 122, and Gum 125 categories, as noted with a "no" 128 status. When the user logs onto the system using the identification number that is associated with this data record, the products that this particular user is able to purchase is limited to items within the authorized categories. The user is either only allowed to select items within the authorized categories, or although allowed for selection, items within unauthorized categories are not included for sale during checkout.

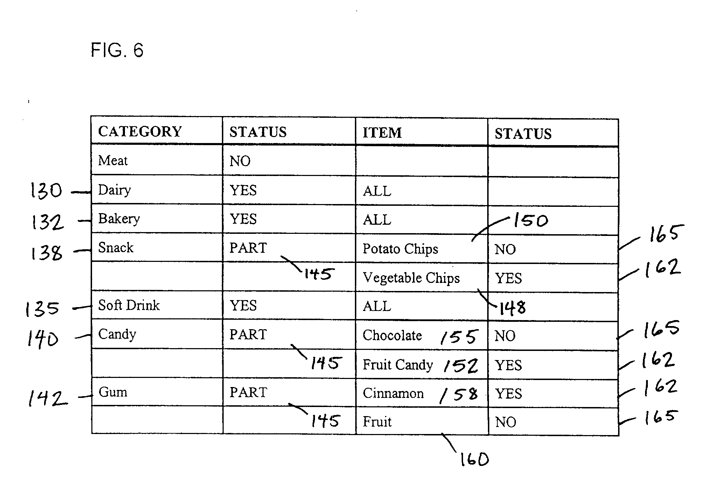

FIG. 6 is an exemplary semi-schematic, conceptual layout diagram detailing the organization of purchase criteria information in the customer criteria database where the criteria is further determined according to item types according to one embodiment of the invention. According to this embodiment, the first user may not want to wholly include or exclude an entire category of products and may instead identify specific products within a category to be authorized for purchase by the secondary user. In the example illustrated in FIG. 6, the user is authorized to purchase all products within the Dairy 130, Bakery 132, and Soft Drink 135 categories. Additionally, the user is authorized to purchase part of the products in the Snack 138, Candy 140, and Gum 142 categories, as noted by the "part" 145 status. For example, the user is authorized to purchase vegetable chips 148 but not potato chips 150, fruit candy 152 but not chocolate155, and cinnamon gum 158 but not fruit gum 160, as noted by either a "yes" 162 or "no" 165 status.

The categories and items listed in these diagrams are solely illustrative of possible categories and items and are not intended to be limiting in any sense. In the diagrams, only a small sampling of products are listed where a much more complete, exhaustive list of products may be used. The quantity and type of categories may be selected depending on the field of goods being sold, the products sold by a particular retailer, breadth of category description, organizational preferences, and any other relevant factors. For example, a category identified as "meat" could be subdivided into categories identifying various types of meat, such as beef, poultry, and fish. Similarly, an item may also be subdivided into the various brand names of the product. For example, potato chips may be subdivided into the various manufacturers of potato chips. Also, data records may embody other suitable formats. For example, the purchase criteria information may include only those categories and items which are authorized by the first user. Categories and items which are not authorized may be omitted from the data record entirely.

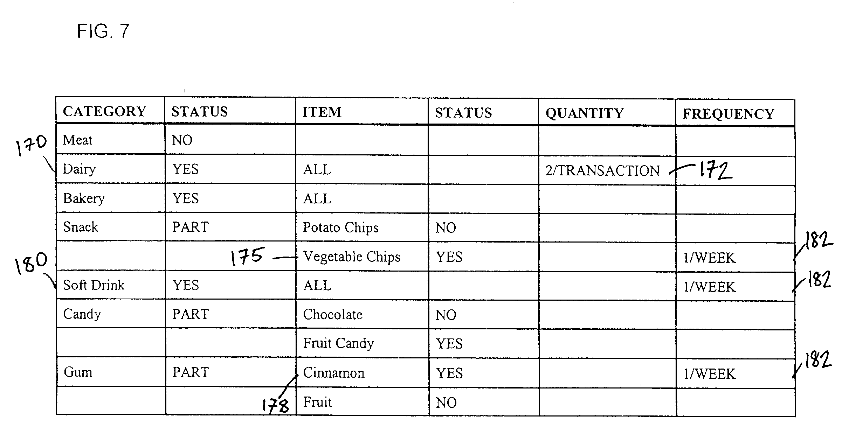

FIG. 7 is an exemplary semi-schematic, conceptual layout diagram detailing the organization of purchase criteria information in the customer criteria database where the criteria is further determined according to quantity and/or time according to one embodiment of the invention. A first user may wish to further regulate a secondary user's purchase of products using quantity and/or time period restrictions. For example, the first user may authorize a particular quantity of a particular product to be purchased, such as once every week or once every month. Similarly, the first user may authorize a limited quantity of a particular product to be purchased during any given transaction. In the example illustrated in FIG. 7, products within the Dairy 170 category are subject to a quantity limitation of two items for each transaction 172. Additionally, vegetable chips 175, cinnamon gum 178, and items within the Soft Drink 180 category are subject to a frequency limitation of one item each week 182. In this regard, the transaction database stores and maintains transaction records for all purchases made using the electronic shopping system. Included in the transaction records are purchase dates associated with the purchased items. When an item is selected for purchase by a secondary user, the server determines the last date of the item or category of item and calculates whether the selected product is allowable given the specific frequency or quantity limitations.

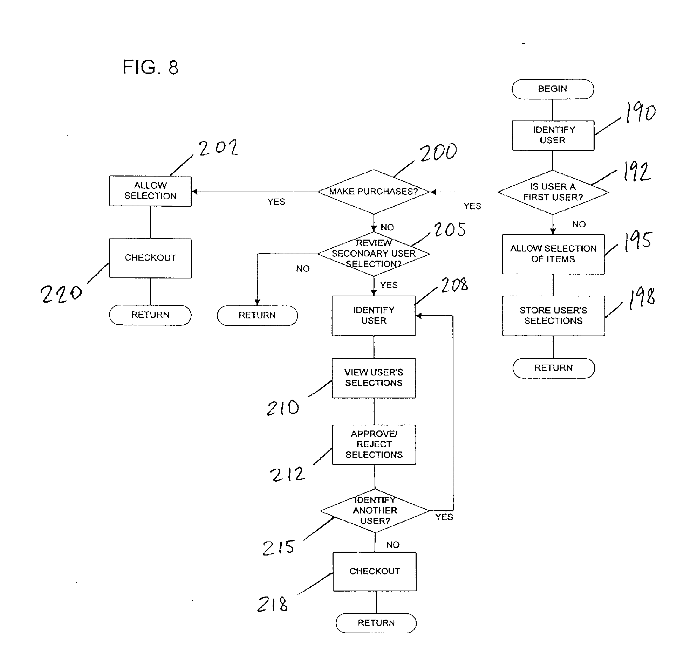

FIG. 8 is a flow diagram of a purchase review and authorization process according to one embodiment of the invention. According to this embodiment, the first user has the ability to review and authorize the purchase selections made by secondary users. Preferably, selections made by secondary users are not immediately processed at checkout, but are subject to the review and regulation of the first user. The first user, upon viewing the secondary user's selections, may either allow the purchase of the selected products or cancel the selection and not permit their purchase. The first user may allow and cancel selections in any suitable combination. For example, the first user may either allow all of the selected items, cancel all of the selected items, or allow any desired number of the selected items, cancelling any remaining, disapproved selected items.

The process illustrated in FIG. 8 starts and, in step 190, the server identifies the user upon accessing the electronic shopping system. Identification of the user may occur during a log on process in which the user is authenticated by the server upon receipt of a valid identification number, name, or user indicia. A password unique to the particular user may additionally be incorporated into the authentication process for ensuring the identity of the user.

In step 192, the server determines whether the user is a first user or a secondary user. In step 195, if the user is a secondary user, the server allows the user to select items for purchase as described above in connection with FIG. 4. When the secondary user has completed selection of items for purchase, in step 198-, the server stores the selections in a transaction data record until approval by the first user. The stored selections may be associated with the secondary user to allow the first to identify and review selections made by the secondary user.

In step 192, if the user is a first user, he or she is given the option to make purchase selections or review the purchase selections made by secondary users. If the first user decides to make purchases, step 200, the system allows the user to make purchase selections in step 202. If the first user decides not to make purchase selections, the user is preferably given the choice to review secondary user purchase selections in step 205. In this regard, the first user identifies the secondary user in step 208. The first user further accesses and reviews the secondary user's purchase selections in step 210. In step 212, upon reviewing the selections, the first user indicates allowance or cancels the selections made by the secondary user. The first user may then, if desired, choose to identify another secondary user and review that secondary user's purchase selections, step 215. Otherwise, the server proceeds to then checkout the first user in step 218. During the checkout process, the items allowed by the first user are billed to the user's account, as established by the first user, and sent to the user at the address as established by the first user. Alternatively, the items may be accumulated and made available for pick up at a determined location.

If the first user chooses to make purchases, the server allows the first user to make purchase selections in step 202 via the user interface provided by the server. After the first user makes purchase selections, the server proceeds to checkout the first user in step 220. During the checkout process, the items selected by the first user are billed to the user's account and processed as described above.

According to one embodiment of the invention, e-mail may be used to notify the first user when selections are waiting to be reviewed and approved by the first user. After a user makes purchase selections, the system may automatically send an e-mail message to the first user informing the first user that selections have been made by a secondary user. The specific selections may be included in the e-mail message. The first user may then access the system to review and approve or cancel the selections. Alternatively, other methods may be established to receive responses to the e-mail notifications. For example, a customer service center may receive e-mails or telephone communications in which the first user approves or cancels the selections identified in the e-mail message. A password may be used to ensure that the person sending the e-mail or making the telephone communication is authorized to approve purchase selections.

According to a further embodiment of the invention, the first user may elect to have the system process the first user's request in a manner similar to that of the secondary user so that the first user will be able review their own selections before the sale transaction is consummated. As similarly described above in connection with defining of purchase criteria in FIG. 4, self-authorization by the first user may be implemented as a form of shopping management or self-regulation.

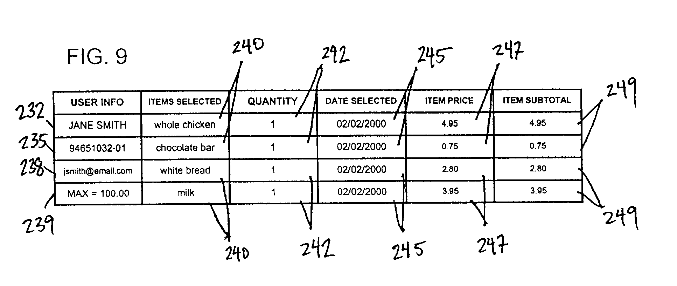

FIG. 9 is a semi-schematic, conceptual layout diagram of an exemplary selection data record stored in the transaction database according to one embodiment of the invention. Purchase selections made by a user may be stored in the form of a selection data record 230 containing information including the name 232, identification number 235, and e-mail address 238 of the user, selections made 240, quantity of each selection 242, date each selection was made 245, date the data record was last modified (not shown), time the selection and/or data record was last modified (not shown) and any other desired information. Each selection data record may be uniquely identified with a particular user by way of data record number. The selection data record may be considered to be an electronic form of a store shopping basket which may provide several advantages over a conventional shopping basket.

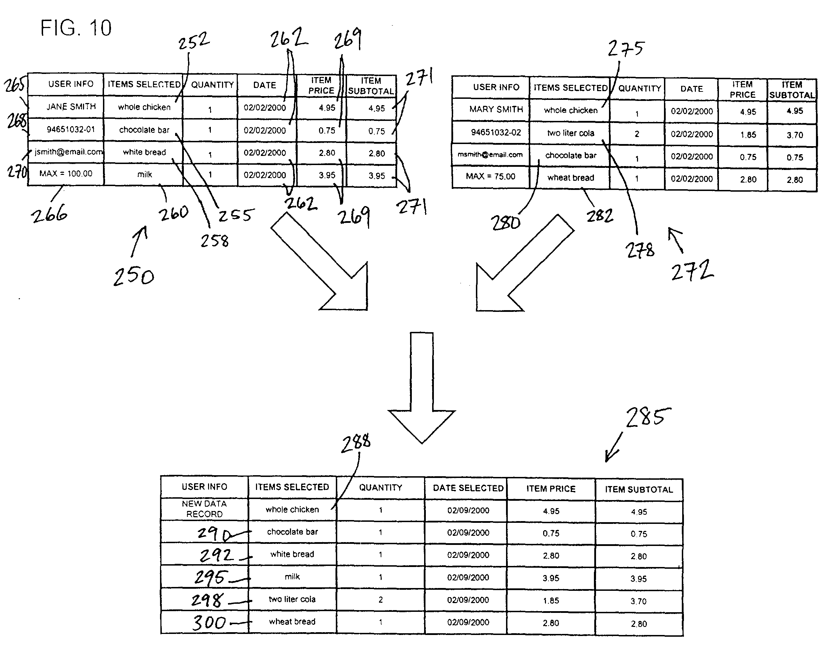

FIG. 10 is a functional diagram illustrating a compare operation performed on the selection data records. The system may compare two or more selection data records and create a new selection data record based on preferences determined by the first user or determined by the server. A new data record may be created or, alternatively, one of the compared data records may be used to contain the post-compare purchase selections. Two or more selection data records may be compared to eliminate duplicate selections. Additionally, the compare operation may be used to compile the selections from multiple selection data records into a single data record that may be more easily reviewed and processed.

As illustrated in FIG. 10, the first exemplary selection data record 250 for a particular user contains information listing one whole chicken 252, one chocolate bar 255, one white bread 258, and one milk 260 as items selected for purchase. The selection data record may also contain the date each item was selected 262 and the user's name 265, identification number 268, and e-mail address 270. The second exemplary selection data record 272 for another user contains information listing one whole chicken 275, two two-liter cola 278, one chocolate bar 280, and one wheat bread 282. A result of the compare operation on the two selection data records is illustrated in a resulting selection data record 285. According to the illustrated compare operation, where duplicate items appeared in both selection data records, only one of the items was included in the resulting selection data record. For example, one whole chicken and one chocolate bar was listed in each of the compared selection data records. However, only one whole chicken 288 and one chocolate bar 290 appears in the resulting selection data record. The resulting selection data record is preferably processed during checkout and only one whole chicken 288 and one chocolate bar 290, along with one white bread 292, one milk 295, one two-liter cola 298, and one wheat bread 300, are purchased and delivered, avoiding duplicate purchase of these items. Accordingly, the compare operation relieves the user from the burden of physically reviewing all of the selections of multiple users to identify and prevent duplicate purchases.

A multitude of options may be specified during the compare operation. In the example illustrated in FIG. 10, the compare operation eliminates duplicate items appearing in a plurality of selection data records. Alternatively, the compare operation may include all duplicate items or only duplicates that appear in particular categories. The compare operation may also combine the quantity of items selected. For example, if two different users each select one chocolate bar, the resulting selection data record may indicate the aggregate quantity of two chocolate bars. The compare option may further be implemented to address the multitude of possible situations and preferences that may arise. The above situations are listed merely as examples of the possible situations and are not intended to be limiting in any sense.

The compare operation may also be used to resolve situations where items are similar but not identical. For example, in the example illustrated in FIG. 10, white bread 258 and wheat bread 282 are selected by separate users. In this situation, items are similar, since both items are types of bread. The options that may be provided to handle such situations include: (a) purchase both white bread and wheat bread; (b) purchase only white bread; (c) purchase only wheat bread; or (d) purchase neither white bread nor wheat bread. In this scenario, the compare operation may be changeably configured to resolve the situation according to any desired criteria, including allowing the purchase of the item that was selected first in time. Alternatively, there might be a default list of preferred products associated with a particular account. The comparable item in the preferred product list may be purchased as an alternative to the item in conflict. For example, if the preferred product list contained rye bread, rye bread may be purchased in lieu of either white or wheat bread. Also, there may be a hierarchy of users associated with a particular account, and the item selected by a user higher up in the hierarchy may be the item that is purchased.

A time frame may be associated with each data record or, alternatively, with each item selection in the data record. The time frame may be predetermined by the electronic shopping system or set by the first user. After the time frame associated with the data record elapses, the data record, or selections in the data record, are preferably deleted. The system may send an automatically generated e-mail message to the first user notifying that there are selections that were either not reviewed or not approved within an allocated amount of time and that the selections have been cancelled. The selection data records may be retained by the system for a period of time, allowing the selecting user access to the system for renewing the selections. By doing so, the selecting user need not re enter the selections, but may simply have the earlier selections re-selected, thus saving the user time and energy.

The electronic shopping system may also automatically generate e-mail messages to be sent to users informing them that their purchase selections have been approved for purchase.

The electronic shopping system may maintain and provide purchase information for any given period of time. For example, a master statement may be created after the end of every month documenting all of the purchases made during the month, which purchase selections were made by which users, and the amount of money spent on the purchases. Statements may also be generated detailing only a particular user's purchase selections. The statements may be accessed using an Internet connection or they may be sent to the appropriate user in an e-mail message or by conventional mail.

The above described embodiments may be used in any possible combination. For example, it may be desirable for the embodiments described in connection with FIG. 4 and FIG. 8 to be used in combination. In such a combination, the first user would be able to define purchase criteria for secondary users and also review and authorize the purchase of items selected before the transaction is consummated. A first user may have inadvertently included or omitted items during the criteria definition process. Combining the embodiments would allow the first user to verify prior to purchase that no inadvertent inclusions or omissions were made. Further, selection data records, compare operations, purchase statements, and e-mail messages may be incorporated in any format and in any combination with the above described embodiments.

While the invention has been described with respect to particular illustrated embodiments, those skilled in the art and technology to which the invention pertains will have no difficulty devising variations which in no way depart from the scope of the present invention. For example, while the illustrated embodiments have been described in connection with electronic shopping, it will be appreciated that the present system and method may be devised for utilization with any other kind of transaction, whether or not in a retail environment, including retail stores, restaurants, service providers, libraries, non-profit information providers, and the like. Objects of such transactions are not limited to items for purchase and need not involve any monetary consideration. Accordingly, the present invention is not limited to the specific embodiments described above, but rather, is defined by the scope of the appended claims.

## Claims

1. A computerized method for regulating electronic network shopping using a data communications network, the method comprising:
maintaining a database coupled to a data communications network, the database including a plurality of data records;
receiving a purchase authorization from a first user;
modifying a data record associated with a second user based on the purchase authorization, the data record including product authorization information;
receiving a purchase request from the second user, the purchase request including a selection based on the product authorization information in the data record; and
processing the purchase request for completing purchase of authorized items for the second user.

2. The method of claim 1, wherein the product authorization information identifies a category of products authorized for purchase.

3. The method of claim 1 or 2, wherein the product authorization information identifies a product type authorized for purchase.

4. The method of claim 1, 2 or 3, wherein the product authorization information identifies a product brand authorized for purchase.

5. The method of any preceding claim, wherein the product authorization information identifies a product quantity authorized for purchase.

6. The method of any preceding claim, wherein the product authorization information identifies a purchase frequency authorized for purchase.

7. The method of any preceding claim, wherein the product authorization information identifies a purchase spending limit.

8. The method of any preceding claim, further comprising:
assigning a first user identification to the first user;
assigning a second user identification to the second user; and
associating the second user identification with the user data record, wherein receiving a purchase request from the second user includes receiving the second user identification.

9. The method of any preceding claim, further comprising:
receiving a second purchase authorization from the first user; and
modifying a second data record associated with a third user based on the second purchase authorization, the second data record including second product authorization information.

10. The method of claim 9, further comprising receiving a second purchase request from the third user, the purchase request including a selection based on the product authorization information in the second data record.

11. A computerized method for regulating electronic network shopping using a data communications network, the method comprising:
maintaining a database coupled to a data communications network, the database including a plurality of data records;
receiving a first purchase selection from a first user, the first purchase selection including at least one item selection;
generating a first data record based on the first purchase selection;
transmitting the first data record to a second user;
receiving a purchase authorization from the second user, the purchase authorization including an identification of items in the first data record authorized for purchase; and
generating a second data record using the purchase authorization.

12. The method of claim 11, wherein the purchase authorization includes a deletion of items in the first data record.

13. The method of claim 11 or 12, wherein the second data record is a subset of the first data record.

14. The method of claim 11, 12 or 13, wherein the purchase authorization includes a modification of the first data record.

15. A computerized method for regulating electronic network shopping using a data communications network, the method comprising:
maintaining a database coupled to a data communications network, the database including a plurality of data records;
receiving a first purchase selection from a first user, the first purchase selection including at least one item selection;
generating a first data record based on the first purchase selection;
receiving a second purchase selection from a second user, the second purchase selection including at least one item selection;
generating a second data record based on the second purchase selection; generating a third data record in the database using the first data record and the second data record, the third data record including items in the first data record and items in the second data record not included in the first data record; and
processing the third data record for completing purchase.

16. The method of claim 15, wherein each of the first data record, the second data record, and the third data record includes at least one purchase item.

17. The method of claim 16, wherein generating a third data record includes removing purchase items that are found in both the first data record and the second data record.

18. The method of claim 16, wherein generating a third data record includes merging the first data record and the second data record.

19. A computerized electronic shopping system for regulated Internet shopping using a data communications network comprising:
a database including a plurality of data records;
a processor coupled to the database, the processor configured to receive a purchase authorization from a first user over the data communications network and modify a data record associated with a second user, the data record including product authorization information, the processor further configured to receive a purchase request from the second user over the data communications network, the purchase request including a selection based on the product authorization information in the data record, and processing the purchase request for completing purchase of authorized items for the second user.

20. The system of claim 19, wherein the product authorization information identifies a category of products authorized for purchase.

21. The system of claim 19 or 20, wherein the product authorization information identifies a product type authorized for purchase.

22. The system of claim 19, 20 or 21, wherein the product authorization information identifies a product brand authorized for purchase.

23. The system of any of claims 19 to 22, wherein the product authorization information identifies a product quantity authorized for purchase.

24. The system of any of claims 19 to 23, wherein the product authorization information identifies a purchase frequency authorized for purchase.

25. The system of any of claims 19 to 24, wherein the product authorization information identifies a purchase spending limit.

26. The system of any of claims 19 to 25, wherein the processor is further configured to assign a first user identification to the first user, assign a second user identification to the second user, and associate the second user identification with the user data record, wherein the purchase includes the second user identification.

27. The system of any of claims 19 to 26, wherein the processor is further configured to receive a second purchase authorization from the first user, and modify a second data record associated with a third user based on the second purchase authorization, the second data record including second product authorization information.

28. The system of claim 27, wherein the processor is further configured to receive a second purchase request from a third user, wherein the purchase request includes a selection based on the product authorization information in the second data record.

29. A computerized electronic shopping system for regulated Internet shopping using a data communications network comprising:
a database including a plurality of data records;
a processor coupled to the database, the processor configured to receive a first purchase selection from a first user, generate a first data record based on the first purchase selection, transmit the first data record to a second user, receive a purchase authorization from the second user, the purchase authorization including an identification of items in the first data record authorized for purchase, and generating a second data record using the purchase authorization.

30. The system of claim 29, wherein the purchase authorization includes a deletion of items in the first data record.

31. The system of claim 29 or 30, wherein the second data record is a subset of the first data record.

32. The system of claim 29, 30 or 31, wherein the purchase authorization includes a modification of the first data record.
